# FASCICULE DE BREVET EUROPEEN

(11) **EP 1 040 023 B1**
(45) Date de publication et mention de la délivrance du brevet: **28.04.2004**
(21) Numéro de dépôt: 99943026.7
(22) Date de dépôt: 22.09.1999
(51) Int. Cl.: B60J 7/14

(54) **TOIT ESCAMOTABLE POUR VEHICULE DU TYPE CAMIONNETTE, VAN OU BREAK**
VERSENKBARES DACH FÜR FAHRZEUG MIT LIEFERWAGEN-, KLEINTRANSPORTWAGEN- ODER KOMBIWAGENAUSFÜHRUNG
COLLAPSIBLE ROOF FOR VEHICLE SUCH AS A TRUCK, VAN OR BREAK

(30) Priorité: 24.09.1998 FR 9811951
(43) Date de publication de la demande: 04.10.2000
(73) Titulaire: Société Européenne de Brevets Automobiles, 75011 Paris (FR)
(72) Inventeur: QUEVEAU, Gérard, F-79140 Cerizay (FR); QUEVEAU, Paul, F-79140 Cerizay (FR); GUILLEZ, Jean-Marc, F-79140 Cerizay (FR)
(74) Mandataire: Rémont, Claude
(86) Numéro de dépôt international: PCT/FR1999/002252
(87) Numéro de publication internationale: WO 2000/017001

(56) Documents cités:
- FR-A- 2 699 868
- US-A- 3 575 464

## Description

Il existe aujourd'hui des véhicules à toit escamotable sur des bases de berlines ou de coupés appelés cabriolets.

Ces cabriolets à toit rigide possèdent un profil typique (toit court et malle arrière) qui permet un escamotage du toit dans la malle arrière selon des technologies connues à ce jour.

La présente invention a pour objectif d'étendre la possibilité de toit escamotable sur des véhicules de type camionnette ou van ou break pour offrir au marché des options à toits ouverts sur une base de véhicule à toit rigide.

Le problème majeur pour ce type de véhicule est évidemment le profil de la zone de toit non prédisposé à un escamotage simple offrant des critères d'habitabilité et de volume de coffre arrière convenables dans les deux positions.

La présente invention a pour but de réaliser un escamotage de toit entièrement automatique et embarqué par des moyens simples et n'altérant ni l'habitabilité du véhicule, ni le volume de la malle arrière.

L'invention vise ainsi un toit escamotable pour véhicule du type camionnette ou break ou van comprenant un toit en deux parties s'étendant entre le bord supérieur du pare-brise et le bord supérieur d'un arceau dressé vers le haut au-dessus de la partie avant de la malle arrière et une partie arrière au moins partiellement vitrée s'étendant entre l'arceau et l'arrière de la malle arrière. Un toit de ce type est révélé par exemple dans le document FR 2 699 868 A.

Suivant l'invention, le toit escamotable est caractérisé en ce que la première partie située près de l'arceau est reliée à la partie latérale du véhicule par deux bras articulés mobiles entre une position dressée vers le haut dans laquelle ladite première partie du toit est située en avant de l'arceau et une position basculée vers l'arrière dans laquelle lesdits bras au moins partiellement et ladite première partie du toit sont situés dans la malle arrière, la seconde partie du toit étant reliée à la première partie par des moyens permettant lors du basculement des bras de déplacer la seconde partie du toit sur la première partie.

Lors du basculement des deux bras vers la malle arrière les deux parties de toit sont déplacées sous l'arceau et viennent se loger l'une sur l'autre dans la malle arrière en occupant un volume réduit de cette dernière.

Selon une version préférée de l'invention, ladite partie arrière s'étendant entre l'arceau et l'arrière de la malle arrière est montée pivotante suivant un axe situé près du bord supérieur arrière de la malle arrière pour pouvoir basculer à l'intérieur de cette malle arrière.

De préférence, le toit escamotable comprend des moyens qui commandent automatiquement et successivement, le basculement de ladite partie arrière vers l'intérieur de la malle arrière, le basculement desdits bras vers l'intérieur de la malle arrière et simultanément le déplacement de la seconde partie du toit sur la première partie.

D'autres particularités et avantages de l'invention apparaîtront encore dans la description ci-après.

Aux dessins annexés donnés à titre d'exemples non limitatifs :
- la figure 1 est une vue de côté avec coupes partielles d'un véhicule équipé d'un toit escamotable selon l'invention ;
- la figure 2 est une vue analogue à la figure 1, montrant le toit et la partie arrière en position repliée dans la malle arrière ;
- la figure 3 est une vue en perspective montrant le détail A de la figure 1 ;
- la figure 4 est une vue en coupe transversale montrant le détail A ci-dessus ;
- les figures 5 et 6 sont respectivement des vues en perspective et une coupe transversale du détail B de la figure 1 ;
- la figure 7 est une de côté montrant le mécanisme de commande du pivotement du dossier arrière ;
- les figures 8 et 9 montrent deux variantes de réalisation de l'invention.

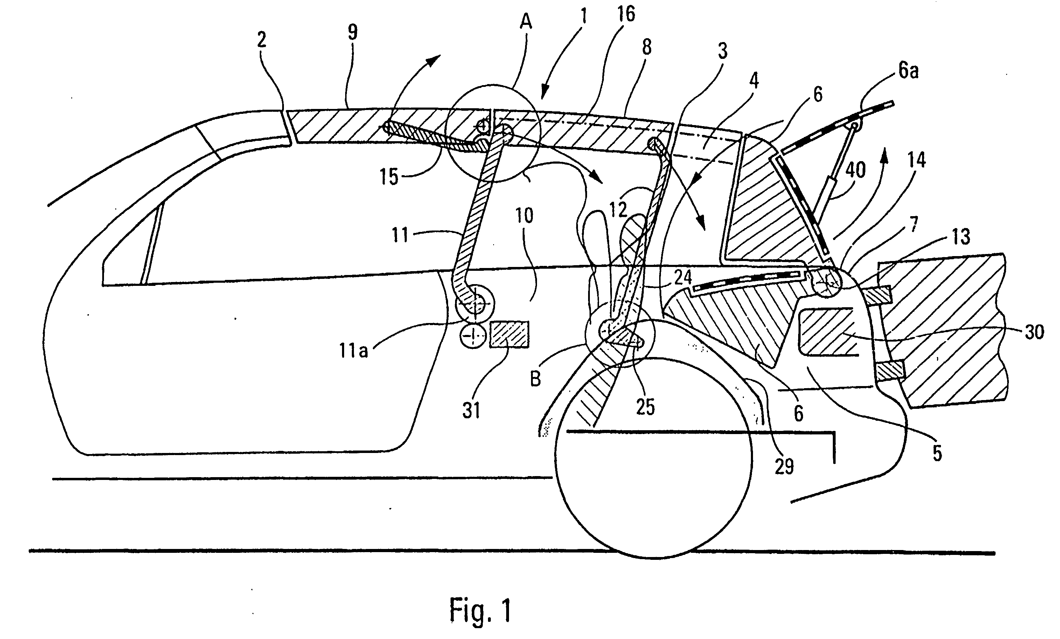

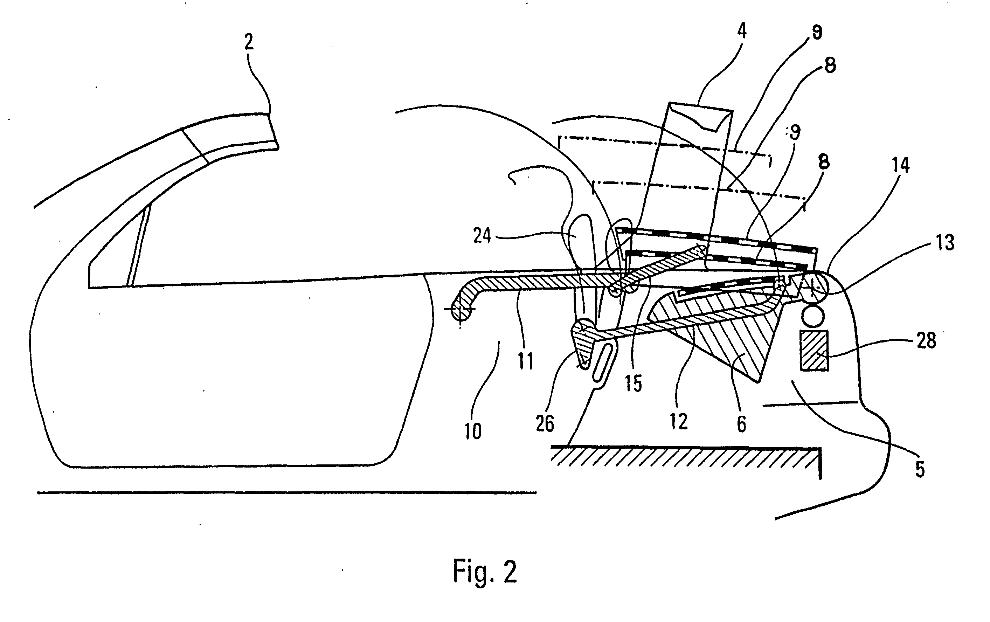

Dans la réalisation représentée sur les figures 1 et 2, le toit escamotable pour véhicule du type camionnette ou break ou van comprend un toit 1 s'étendant entre le bord supérieur 2 du pare-brise et le bord supérieur 3 d'un arceau 4 dressé vers le haut au-dessus de la partie avant de la malle arrière 5. Une partie arrière. 6 au moins partiellement vitrée s'étend entre l'arceau 4 et l'arrière 7 de la malle arrière 5.

Conformément à l'invention le toit 1 est en deux parties 8, 9. La première partie 8 située près de l'arceau 4 est reliée à la partie latérale 10 du véhicule par deux bras articulés 11, 12 mobiles entre une position dressée vers le haut dans laquelle (voir figure 1), la première partie 8 du toit est située en avant de l'arceau 4 et une position basculée vers l'arrière dans laquelle (voir figure 2) les bras 11, 12 au moins partiellement et la première partie 8 du toit sont situés dans la malle arrière 5.

En outre, la seconde partie 9 du toit est reliée à la première partie 8 par des moyens permettant lors du basculement des bras 11, 12 de déplacer la seconde partie 9 du toit sur la première partie 8.

Ainsi en position de rangement dans la malle arrière, les deux parties 8, 9 du toit sont superposées et partiellement emboîtées l'une dans l'autre, comme le montre la figure 2.

Par ailleurs, la partie arrière 6 s'étendant entre l'arceau 3 et l'arrière 7 de la malle arrière 5 est montée pivotante suivant un axe 13 situé près du bord supérieur arrière 14 de la malle arrière 5 pour pouvoir basculer à l'intérieur de cette malle arrière 5, comme montré sur les figures 1 et 2.

Le toit escamotable conforme à l'invention comprend des moyens qui commandent automatiquement et successivement le basculement de la partie arrière 6 vers l'intérieur de la malle arrière 5, le basculement des bras 11, 12 vers l'intérieur de la malle arrière 5 et simultanément le déplacement de la seconde partie 9 du toit sur la première partie 8.

Le déplacement de la seconde partie 9 du toit sur la première partie 8 est assuré, d'une part, par une biellette 15 reliant de façon articulée les deux parties 8, 9 de toit, cette biellette 15 pouvant pivoter et, d'autre part, par une glissière 16 prévue le long de la première partie 8 de toit permettant de guider le coulissement de la seconde partie 9 de toit sur la première partie 8 de toit.

Le pivotement de la biellette 15 est commandé par le déplacement angulaire du bras 11 qui est relié à la première partie 8 de toit, qui est le plus proche de la seconde partie 9 de toit.

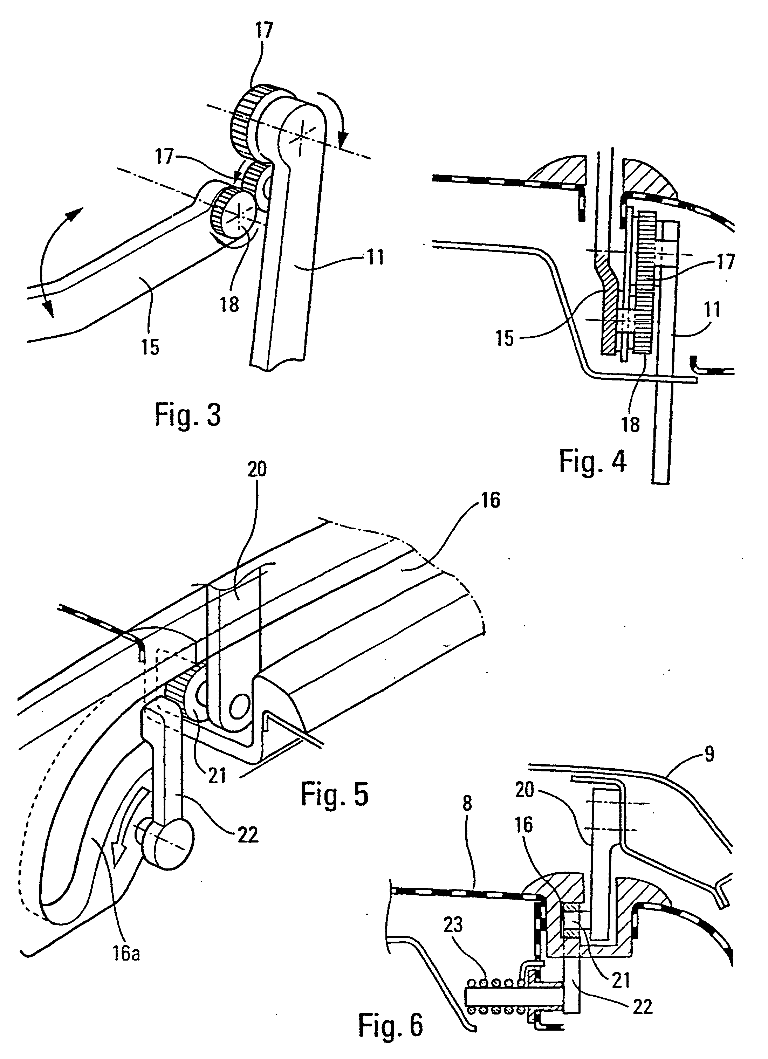

Comme on le voit sur les figures 3 et 4, l'extrémité du bras 11 porte un pignon 17 engrenant avec un pignon 18 situé à l'extrémité de la biellette 15, par l'intermédiaire d'un pignon intermédiaire 19 pour que le sens de la rotation de la biellette 15 soit le même que celui du bras 11.

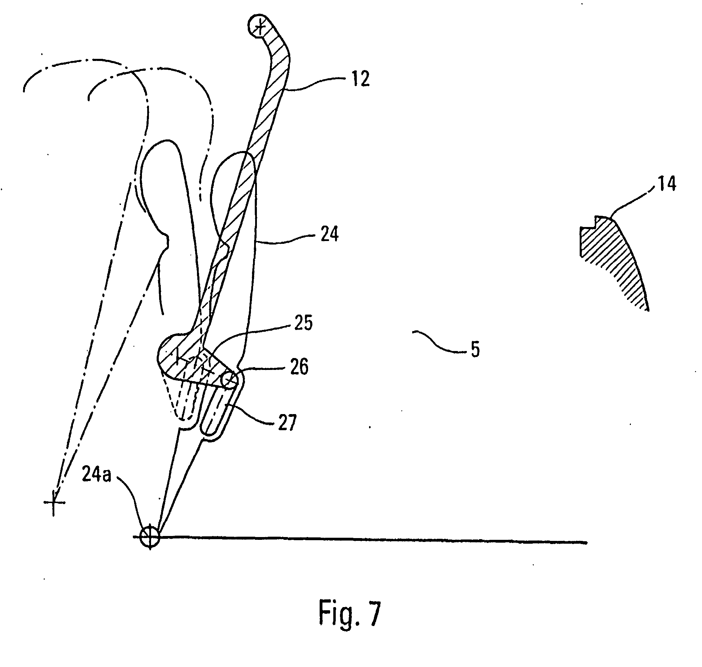

Par ailleurs, la seconde partie 9 de toit porte un bras 20 (voir figures 5 et 6) comportant un galet 21 engagé dans la glissière 16 de la première partie 8 de toit.

On voit également sur la figure 5 que la partie avant 16a de la glissière 16 est conformée en arc de cercle permettant un dégagement vers le haut de la seconde partie 9 de toit au moment de l'ouverture.

De plus, lorsque le galet 21 du bras 20 est engagé dans la partie 16a en arc de cercle, le bras 20 prend appui contre un doigt pivotant 22 sollicité par un ressort 23 tendant à pousser le bras 20 vers le haut, pour faciliter le coulissement de la partie 9 par rapport à la partie 8 du toit.

Comme montré par les figures 1, 2 et 7, la partie avant de la malle arrière 5 est fermée par le dossier arrière 24 du véhicule. Ce dossier 24 peut pivoter vers l'avant autour d'un axe 24a lors du déplacement des deux parties 8, 9 de toit vers la malle arrière 5.

Cette disposition permet d'augmenter la longueur de la malle arrière 5 pour faciliter l'accès des parties de toit 8, 9.

Le pivotement du dossier 24 est commandé par un mécanisme reliant au dossier 24 le bras 12 qui est relié à la première partie 8 du toit et qui est le plus éloigné de la seconde partie 9 du toit.

Ce mécanisme comprend une patte 25 reliée à l'extrémité du bras 12 opposée à la première partie 8 de toit. L'extrémité de cette patte 25 porte un galet 26 engagé dans une rainure 27 solidaire du dossier 24.

Par ailleurs, la partie arrière 6 comporte une fenêtre 6a pouvant s'ouvrir vers le haut sous l'action d'un vérin 40 (figure 1).

On va maintenant expliquer le fonctionnement du toit escamotable que l'on vient de décrire.

Pour découvrir le toit on commence par basculer la partie arrière 6 dans la malle arrière 5. Ce mouvement est commandé par un moteur électrique 28 (voir figure 2).

Lorsque cette partie arrière 6 est en position dans la malle arrière 5, sa forme s'intercale parfaitement entre les passages de roue 29 et les feux arrières 30 qui font saillie à l'intérieur de la malle arrière.

Ensuite, on commande le pivotement autour de son axe inférieur 11a du bras 11 relié à la partie 8 de toit. Ce mouvement est commandé par un moteur électrique 31.

Les deux bras 11, 12 en pivotant vers l'arrière déplacent les deux parties 8, 9 de toit vers la malle arrière 5 en passant sous l'arceau 4.

Lors du basculement des bras 11, 12 vers l'arrière, le déplacement angulaire du bras 11 commande par l'intermédiaire des pignons 17, 19, 18, la rotation de la biellette 15 dans le même sens que celui du bras 11.

Ensuite la seconde partie de toit 9 coulisse sur la première partie de toit 8 grâce à la rainure 16 et au galet 21 porté par le bras 20.

En fin de course, les deux parties de toit 8, 9 arrivent dans la malle arrière 5 en position partiellement emboîtée l'une dans l'autre et en n'occupant ainsi qu'une faible hauteur.

Pour faciliter l'accès des deux parties de toit 8, 9 dans la malle arrière 5, le dossier arrière 24 pivote légèrement vers l'avant grâce au mécanisme associé au bras basculant 12.

Bien entendu l'invention n'est pas limitée à l'exemple de réalisation que l'on vient de décrire et on peut apporter à celui-ci de nombreuses modifications sans sortir du cadre d'invention.

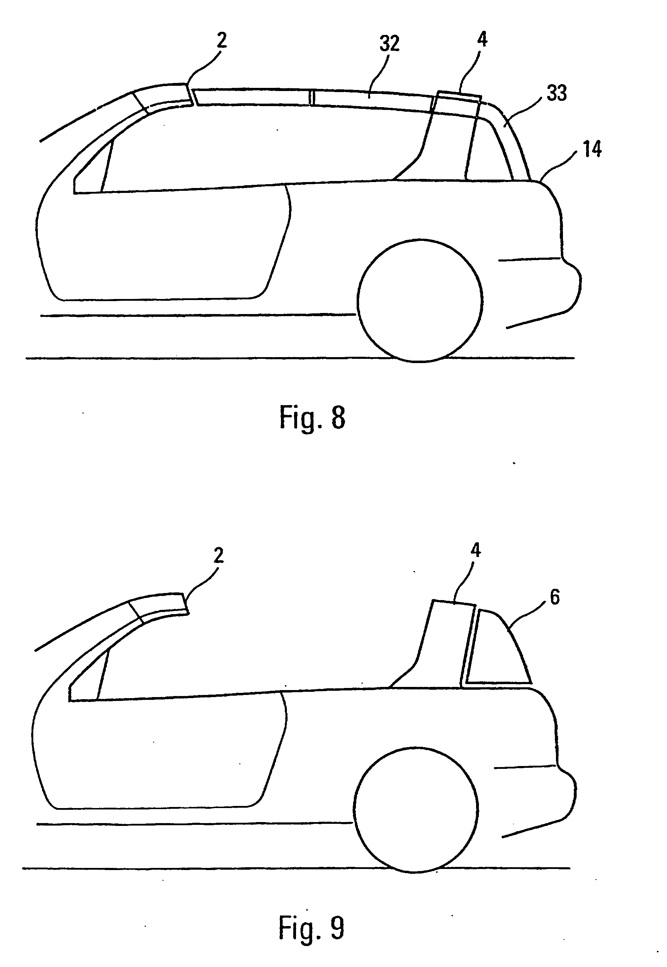

Ainsi, comme montré par la figure 8, la structure du véhicule pourrait si nécessaire être renforcée par des éléments rigides 32, 33 s'étendant entre le bord avant 2 et l'arceau 4 et/ou entre l'arceau et le bord arrière supérieur 14 de la malle arrière.

Par ailleurs, la partie arrière 6 au lieu de pouvoir pivoter vers la malle arrière 5 pourrait rester fixe, comme montré par la figure 9, pourvu que sa forme permette le passage des parties de toit 8, 9.

## Revendications

1. Toit escamotable pour véhicule du type camionnette ou break ou van comprenant un toit (1) en deux parties (8, 9) s'étendant entre le bord supérieur (2) du pare-brise et le bord supérieur (3) d'un arceau (4) dressé vers le haut au-dessus de la partie avant de la malle arrière (5) et une partie (6) arrière au moins partiellement vitrée s'étendant entre l'arceau (4) et l'arrière (7) de la malle arrière, **caractérisé en ce que** la première partie (8) située près de l'arceau (4) est reliée à la partie latérale (10) du véhicule par deux bras articulés (11, 12) mobiles entre une position dressée vers le haut dans laquelle ladite première partie (8) du toit est située en avant de l'arceau (4) et une position basculée vers l'arrière dans laquelle lesdits bras (11, 12) au moins partiellement et ladite première partie (8) du toit sont situés dans la malle arrière (5), la seconde partie (9) du toit étant reliée à la première partie (8) par des moyens permettant lors du basculement des bras de déplacer la seconde partie (9) du toit sur la première partie (8).

2. Toit escamotable conforme à la revendication 1, **caractérisé en ce que** ladite partie arrière (6) s'étendant entre l'arceau (4) et l'arrière (7) de la malle arrière (5) est montée pivotante suivant un axe (13) situé près du bord supérieur arrière (7) de la malle arrière (5) pour pouvoir basculer à l'intérieur de cette malle arrière (5).

3. Toit escamotable conforme à la revendication 2, **caractérisé en ce qu'**il comprend des moyens qui commandent automatiquement et successivement, le basculement de ladite partie arrière (6) vers desdits bras (11, 12) vers l'intérieur de la malle arrière (5) et simultanément le déplacement de la seconde partie (9) du toit sur la première partie (8).

4. Toit escamotable conforme à l'une des revendications 1 à 3, **caractérisé en ce que** le déplacement de la seconde partie (9) du toit sur la première partie (8) est assuré, d'une part, par une biellette (15) reliant de façon articulée les deux parties de toit (8, 9), cette biellette (15) pouvant pivoter et, d'autre part, par une glissière (16) prévue le long de la première partie (8) du toit permettant de guider le coulissement de la seconde partie (9) du toit sur la première partie (8) du toit.

5. Toit escamotable conforme à la revendication 4, **caractérisé en ce que** le pivotement de la biellette (15) est commandé par le déplacement angulaire du bras (11) qui est relié à la première partie (8) du toit, le plus proche de la seconde partie (9) du toit.

6. Toit escamotable conforme à la revendication 5, **caractérisé en ce que** l'extrémité dudit bras (11), le plus proche de la seconde partie (9) du toit, porte un pignon (17) engrenant avec un pignon (18) porté par l'extrémité de la biellette (15) par l'intermédiaire d'un pignon intermédiaire (19).

7. Toit escamotable conforme à l'une des revendications 4 à 6, **caractérisé en ce que** la seconde partie (9) du toit porte un autre bras (20) comportant un galet (21) engagé dans la glissière (16) de la première partie (8) du toit.

8. Toit escamotable conforme à la revendication 7, **caractérisé en ce que** la partie avant (16a) de la glissière (16) est conformée en arc de cercle permettant un dégagement vers la haut de la seconde partie (9) du toit au moment de l'ouverture.

9. Toit escamotable conforme à la revendication 8, **caractérisé en ce que** lorsque le galet (21) du bras (20) est engagé dans la partie en arc de cercle (16a), le bras (20) prend appui contre un doigt pivotant (22) sollicité par un ressort (23) tendant à pousser le bras (20) vers le haut.

10. Toit escamotable conforme à l'une des revendications 1 à 9, **caractérisé en ce que** la partie avant de la malle arrière (5) est fermée par le dossier arrière (24) du véhicule, ce dossier (24) pouvant pivoter vers l'avant lors du déplacement des deux parties de toit (8, 9) vers la malle arrière (5).

11. Toit escamotable conforme à la revendication 10, **caractérisé en ce que** le pivotement du dossier (24) est commandé par un mécanisme reliant au dossier (24) l'un des bras (12) reliés à la première partie (8) du toit.

12. Toit escamotable conforme à la revendication 11, **caractérisé en ce que** ledit mécanisme comprend une patte (25) reliée à l'extrémité du bras (12) qui est le plus éloigné de la seconde partie (9) du toit, opposée à la première partie (8) de toit, dont l'extrémité est engagée dans une rainure (27) solidaire du dossier.

13. Véhicule comprenant un toit escamotable suivant l'une quelconque des revendications 1 à 12, **caractérisé en ce qu'**il comporte des éléments rigides (32, 33) s'étendant entre le bord avant (2) et l'arceau (14) et/ou entre l'arceau et le bord arrière supérieur (14) de la malle arrière.

## Patentansprüche

1. Versenkbares Dach für Fahrzeuge der Art Lieferwagen oder Kleintransporter oder Kombiwagen mit einem Dach (1) aus zwei Teilen (8, 9), das sich zwischen der Oberkante (2) der Windschutzscheibe und der Oberkante (3) eines Bügels (4), der über den vorderen Bereich des hinteren Kofferraumes (5) hochgezogen ist, und einem zumindest teilweise mit Fenster versehenen, hinteren Bereich (6) erstreckt, der sich zwischen dem Bügel (4) und dem hinteren Bereich (7) des hinteren Kofferraumes erstreckt, **dadurch gekennzeichnet, dass** der erste, nahe des Bügels (4) angeordnete Bereich (8) mit dem Seitenbereich (10) des Fahrzeugs durch zwei gelenkig angebrachte Arme (11, 12) verbunden ist, welche beweglich sind zwischen einer nach oben gezogenen Position, in welcher der erste Bereich (8) des Daches vor dem Bügel (4) angeordnet ist, und einer nach hinten gekippten Position, in welcher die Arme (11, 12) zumindest teilweise und der erste Bereich (8) des Daches in dem hinteren Kofferraum (5) angeordnet sind, wobei der zweite Bereich (9) des Daches mit dem ersten Bereich (8) durch Vorrichtungen verbunden ist, welche während des Kippens der Arme ermöglichen, den zweiten Bereich (9) des Daches über den ersten Bereich (8) zu bewegen.

2. Versenkbares Dach gemäß Anspruch 1, **dadurch gekennzeichnet, dass** der sich zwischen dem Bügel (4) und dem hinteren Bereich (7) des hinteren Kofferraumes (5) erstreckende hintere Bereich (6) schwenkbar entlang einer Achse (13) angebracht ist, die in der Nähe der hinteren Oberkante (7) des hinteren Kofferraumes (5) angeordnet ist, um in das Innere dieses hinteren Kofferraumes (5) kippen zu können.

3. Versenkbares Dach gemäß Anspruch 2, **dadurch gekennzeichnet, dass** es Vorrichtungen aufweist, die automatisch und nacheinander das Kippen des hinteren Bereiches (6) in den Innenraum des hinteren Kofferraumes (5), das Kippen der Arme (11, 12) in den Innenraum des hinteren Kofferraumes (5) und gleichzeitig die Bewegung des zweiten Bereiches (9) des Daches über den ersten Bereich (8) steuern.

4. Versenkbares Dach gemäß einem der Ansprüche 1 bis 3, **dadurch gekennzeichnet, dass** die Verschiebung des zweiten Bereiches (9) des Daches über den ersten Bereich (8) einerseits von einem Schwingarm (15) sichergestellt wird, der die beiden Bereiche (8, 9) des Daches in gelenkiger Weise miteinander verbindet, wobei dieser Schwingarm (15) schwenken kann, und andererseits von einer entlang des ersten Dachbereiches (8) vorgesehenen Gleitschiene (16), welche ermöglicht, das Gleiten des zweiten Dachbereiches (9) über den ersten Dachbereich (8) zu führen.

5. Versenkbares Dach gemäß Anspruch 4, **dadurch gekennzeichnet, dass** die Schwenkbewegung des Schwingarmes (15) von der Winkelverschiebung des Armes (11) gesteuert wird, der mit dem ersten Dachbereich (8) verbunden ist, und der dem zweiten Dachbereich (9) am nächsten liegt.

6. Versenkbares Dach gemäß Anspruch 5, **dadurch gekennzeichnet, dass** das Ende des Armes (11), der dem zweiten Dachbereich (9) am nächsten liegt, ein Ritzel (17) trägt, das mittels eines Zwischenritzels (19) in ein von dem Ende des Schwingarmes (15) getragenes Ritzel (18) eingreift.

7. Versenkbares Dach gemäß einem der Ansprüche 4 bis 6, **dadurch gekennzeichnet, dass** der zweite Bereich (9) des Daches einen weiteren Arm (20) mit einer Reibrolle (21) trägt, welche in die Gleitschiene (16) des ersten Bereiches (8) des Daches eingegriffen ist.

8. Versenkbares Dach gemäß Anspruch 7, **dadurch gekennzeichnet, dass** der vordere Bereich (16a) der Gleitschiene (16) kreisbogenförmig ausgebildet ist, wodurch eine Auslenkung nach oben des zweiten Dachbereiches (9) zum Zeitpunkt der Öffnung ermöglicht wird.

9. Versenkbares Dach gemäß Anspruch 8, **dadurch gekennzeichnet, dass** wenn die Reibrolle (21) des Armes (20) in den kreisbogenförmigen Bereich (16a) eingreift, der Arm (20) in Anschlag gegen einen Schwenkzapfen (22) kommt, der von einer Feder (23) vorgespannt ist, die dazu neigt, den Arm (20) nach oben zu drücken.

10. Versenkbares Dach gemäß einem der Ansprüche 1 bis 9, **dadurch gekennzeichnet, dass** der vordere Bereich des hinteren Kofferraumes (5) von der hinteren Sitzlehne (24) des Fahrzeugs geschlossen ist, wobei diese Sitzlehne (24) während der Verschiebung der beiden Dachbereiche (8, 9) zu dem hinteren Kofferraum (5) hin nach vorne schwenken kann.

11. Versenkbares Dach gemäß Anspruch 10, **dadurch gekennzeichnet, dass** die Schwenkbewegung der Sitzlehne (24) von einem Mechanismus gesteuert wird, der die Sitzlehne (24) mit einem der Arme (12) verbindet, welcher mit dem ersten Bereich (8) des Daches verbunden ist.

12. Versenkbares Dach gemäß Anspruch 11, **dadurch gekennzeichnet, dass** der Mechanismus eine Befestigungsklammer (25) umfasst, die mit dem Ende des am weitesten von dem zweiten Bereich (9) des Daches entfernt liegenden Armes (12) verbunden ist, welches dem ersten Dachbereich (8) gegenüberliegt, und deren Ende in eine einstückig mit der Sitzlehne ausgebildete Rille (27) eingegriffen ist.

13. Fahrzeug mit einem versenkbaren Dach gemäß irgendeinem der Ansprüche 1 bis 12, **dadurch gekennzeichnet, dass** es Versteifungselemente (32, 33) aufweist, die sich zwischen der Vorderkante (2) und dem Bügel (4) und/oder zwischen dem Bügel und der oberen Hinterkante (14) des hinteren Kofferraumes erstrecken.

## Claims

1. Retractable roof for truck, van or station wagon type vehicles, including a roof (1) in two parts (8, 9) extending between the top edge (2) of the windscreen and the top edge (3) of an upstanding arch member (4) above the front part of the boot (5) and an at least partially glazed rear part (6) extending between the arch member (4) and the rear (7) of the boot, **characterized in that** the first part (8) near the arch member (4) is connected to the lateral part (10) of the vehicle by two articulated arms (11, 12) mobile between an upright position in which the said first part (8) of the roof is in front of the arch member (4) and a position swung towards the rear in which the said arms (11, 12), at least partially, and the said first part (8) of the roof are in the boot (5), the second part (9) of the roof being connected to the first part (8) by means for moving the second part (9) of the roof over the first part (8) when the arms swing.

2. Retractable roof according to Claim 1, **characterized in that** the said rear part (6) between the arch member (4) and the rear (7) of the boot (5) pivots about an axis (13) near the rear top edge (7) of the boot (5) so that it can be swung into the boot (5).

3. Retractable roof according to Claim 2, **characterized in that** it includes means for automatically and successively swinging the said rear part (6) towards the inside of the boot (5), swinging the said arms (11, 12) towards the inside of the boot (5) and simultaneously moving the second part (9) of the roof over the first part (8).

4. Retractable roof according to one of Claims 1 to 3, **characterized in that** the second part (9) of the roof is moved over the first part (8), on the one hand, by a link (15) providing an articulated connection between the two roof parts (8, 9), this link (is) being capable of pivoting and, on the other hand, by a slide (16) along the first part (8) of the roof for guiding the sliding of the second part (9) of the roof over the first part (8) of the roof.

5. Retractable roof according to Claim 4, **characterized in that** the link (15) is caused to pivot by the angular motion of the arm (11) connected to the first part (8) of the roof nearest the second part (9) of the roof.

6. Retractable roof according to Claim 5, **characterized in that** the end of the said arm (11) nearest the second part (9) of the roof carries a gear (17) meshing with a gear (18) carried by the end of the link (15) via an intermediate gear (19).

7. Retractable roof according to one of Claims 4 to 6, **characterized in that** the second part (9) of the roof carries another arm (20) incorporating a roller (21) engaged in the slide (16) on the first part (8) of the roof.

8. Retractable roof according to Claim 7, **characterized in that** the front part (16a) of the slide (16) has a circular arc shape to enable the second part (9) of the roof to be offset in the upward direction when the roof is opened.

9. Retractable roof according to Claim 8, **characterized in that**, when the roller (21) on the arm (20) is engaged in the circular arc-shaped part (16a), the arm (20) bears against a pivoting finger (22) spring-loaded by a spring (23) urging the arm (20) upwards.

10. Retractable roof according to one of Claims 1 to 9, **characterized in that** the front part of the boot (5) is closed by the rear seat back (24) of the vehicle which can pivot towards the front when the two roof parts (8, 9) move towards the boot (5).

11. Retractable roof according to Claim 10, **characterized in that** the seat back (24) is pivoted by a mechanism connecting to the seat back (24) one of the arms (12) which are connected to the first part (8) of the roof.

12. Retractable roof according to Claim 11, **characterized in that** the said mechanism includes a lug (25) connected to the end of the arm (12) furthest away from the second part (9) of the roof, which end is at the opposite end to the first roof part (8) and the end of which lug is engaged in a groove (27) attached to the seat back.

13. Vehicle including a retractable roof according to any one of Claims 1 to 12, **characterized in that** it includes rigid members (32, 33) extending between the front edge (2) and the arch member (14) and/or between the arch member and the top rear edge (14) of the boot.
